# EUROPÄISCHE PATENTSCHRIFT

(11) **EP 0 935 326 B1**
(45) Veröffentlichungstag und Bekanntmachung des Hinweises auf die Patenterteilung: **16.04.2003**
(21) Anmeldenummer: 99100383.1
(22) Anmeldetag: 18.01.1999
(51) Int. Cl.: H02G 3/08, H02G 3/12

(54) **Installationseinrichtung**
Installation device
Dispositif d'installation

(30) Priorität: 30.01.1998 DE 19803714
(43) Veröffentlichungstag der Anmeldung: 11.08.1999
(73) Patentinhaber: SIEMENS AKTIENGESELLSCHAFT, 80333 München (DE)
(72) Erfinder: Luber, Georg, Dipl.-Ing. (FH), 93158 Teublitz (DE); Weissberger, Günther, Dipl.-Ing. (FH), 93309 Kelheim (DE)

(56) Entgegenhaltungen:
- US-A- 5 041 698
- US-A- 5 189 256

## Beschreibung

Die Erfindung bezieht sich auf eine Installationseinrichtung, z. B. Schalter, Taster, Steckdose oder ähnliches, bei der ein Geräteeinsatz mittels eines Rahmens, nachstehend Hängebügel genannt, an einer Einbaudose befestigbar ist, wobei der Einbauraum durch ein entsprechendes Bedienteil abzudecken ist bzw. bei zum Abdecken nicht ausreichender Abmessung des Bedienteils oder aus ästhetischen Gründen in Verbindung mit einem Abdeckrahmen sich abdecken lässt, und wobei auf der Einbaudose ein Zwischenrahmen befestigbar ist, der in seinem Umfangsprofil dem abdeckenden Bedienteil bzw. dem Abdeckrahmen angepasst ist und der Hängebügel durch Befestigungsmittel, beispielsweise Schrauben, an der Einbaudose oder am Zwischenrahmen zu befestigen ist.

Eine derartige Installationseinrichtung ist z. B. durch die US-A-5,041,698 bekannt. Bei der bekannten Installationseinrichtung dient der Zwischenrahmen dazu, die Öffnung in der Wand abzudecken. Der Zwischenrahmen ist hierzu zwischen dem Hängebügel und der Wandoberfläche gehalten. Um einen kompakten Aufbau zu erhalten, ist der Zwischenrahmen derart ausgestaltet, dass er den Hängebügel aufnehmen kann. Der Zwischenrahmen steht damit nicht zur Schaffung eines vertieften Einbauraums bei Einbaudosen zur Verfügung.

Mit Einzug der Elektronik in die Installationstechnik kommen oftmals die Geräteeinsätze mit der standardmäßigen Einbautiefe von 32 mm, einem Normmaß, nicht mehr aus. Zur Abhilfe wurden besonders tiefe Dosen eingesetzt, was bei Neubauten einen erhöhten Planungsaufwand erfordert und bei der Altbausanierung mit erhöhtem Schmutz verbunden ist. Man hat auch spezielle Geräteausführungen geschaffen, was in Herstellung und Lagerhaltung unwirtschaftlich ist.

Der Erfindung liegt die Aufgabe zugrunde, eine Installationseinrichtung zu entwickeln, die auf wirtschaftliche Weise eine Anpassung an die geschilderten Fälle ermöglicht.

Die Lösung der geschilderten Aufgabe erfolgt durch eine Installationseinrichtung nach Anspruch 1. Im Bedarfsfall kann ein Geräteeinsatz mit erhöhtem Raumbedarf in der Einbautiefe an einem Zwischenrahmen befestigt werden. Dieser Zwischenrahmen ist in seinem Umfangsprofil dem abdeckenden Bedienteil angepaßt. Wenn das Bedienteil in einem Abdeckrahmen angeordnet werden soll, ist der Zwischenrahmen dem Umfangsprofil des Abdeckrahmens angepaßt. Durch den Zwischenrahmen erzielt man erfindungsgemäß eine deutlich erhöhte Auflage für den Hängebügel, der durch Befestigungsmittel, beispielsweise Schrauben, an der Einbaudose oder am Zwischenrahmen befestigt werden kann. Am Geräteeinsatz kann das Bedienteil in üblicher Weise, z. B. am Gerätesockel, befestigt werden, wozu eine Schraube genügen kann.

Der Zwischenrahmen kann also im Bedarfsfall eingesetzt werden, ohne bei den übrigen Bauelementen der Installationseinrichtung Sonderlösungen zu erfordern. Durch das deutliche Höhersetzen des Hängebügels am Zwischenrahmen schafft man in einer Einbaudose einen darunterliegenden vertieften Einbauraum.

Die Befestigung des Zwischenrahmens an der Einbaudose kann durch Verbindungsmittel erfolgen, die zugleich den Hängebügel am Zwischenrahmen befestigen. Als Befestigungsmittel eignen sich entsprechend lange Schrauben.

Die Erfindung soll nun anhand von in der Zeichnung grob schematisch wiedergegebenen Ausführungsbeispielen näher erläutert werden:
- In FIG 1: ist eine Seitenansicht aufgebrochen und teilweise im Längsschnitt wiedergegeben.
- In FIG 2: ist die Hälfte der Ansicht nach Art von FIG 1 für ein anderes Ausführungsbeispiel dargestellt.
- In FIG 3: ist die Aufsicht auf den Zwischenrahmen wiedergegeben, wobei Bedienteil und Abdeckrahmen entfernt sind.

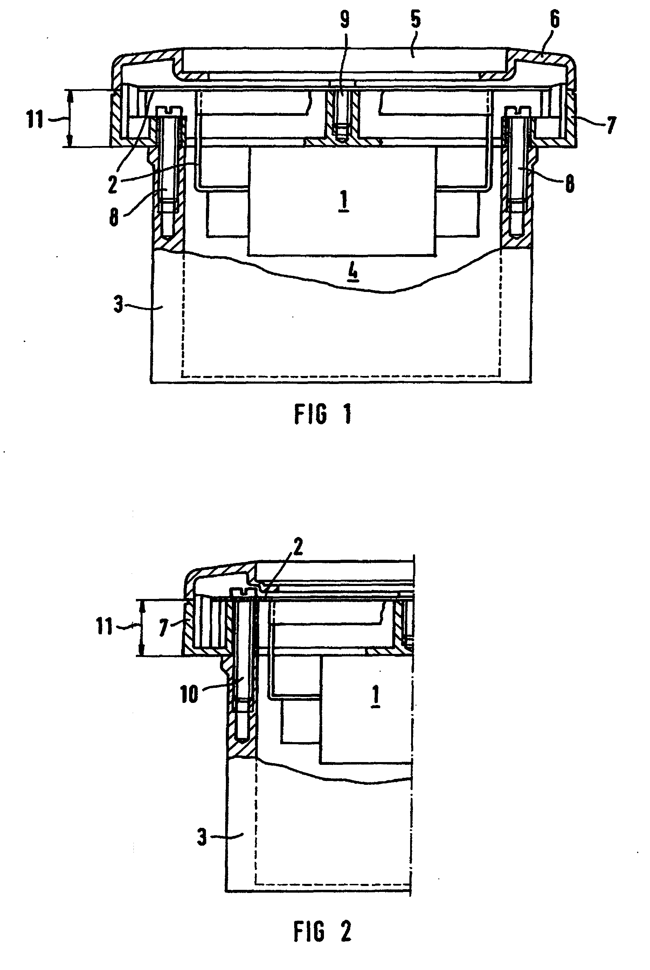

Die Installationseinrichtung nach FIG 1 gibt ein Ausführungsbeispiel als Schalter oder Taster wieder. Der Geräteeinsatz 1 ist mittels eines Rahmens, der nachstehend Hängebügel 2 genannt wird, an einer Einbaudose 3 befestigt. Der Einbauraum 4 wird durch ein Bedienteil 5 und durch einen Abdeckrahmen 6 abgedeckt. Auf der Einbaudose 3 ist ein Zwischenrahmen 7 befestigbar, der im Ausführungsbeispiel in seinem Umfangsprofil dem Abdeckrahmen 6 angepaßt ist. Der Zwischenrahmen 7 bildet eine erhöhte Auflage für den Hängebügel 2. Die Ausbildung kann so sein, daß der Hängebügel an der Einbaudose 3 direkt befestigt werden kann oder am Zwischenrahmen zu befestigen ist.

Am Geräteeinsatz 1 kann das Bedienteil 5 in üblicher Weise gelagert sein. Im Ausführungsbeispiel nach FIG 1 ist der Zwischenrahmen 7 an der Einbaudose 3 mit Befestigungsschrauben 8 angebracht. Der Geräteeinsatz 1 ist durch eine Befestigungsschraube 9 am Zwischenrahmen 7 gehalten. Das Bedienteil 5 kann in herkömmlicher Weise mit seinen Lagerungsmitteln den Abdeckrahmen 6 halten.

Im Ausführungsbeispiel nach FIG 2 dienen geeignet lange Befestigungsschrauben 10 dazu, den Zwischenrahmen 7 und den Hängebügel 2 mit dem Geräteeinsatz 1 an der Einbaudose 3 zu halten. Verständlicherweise können als Verbindungsmittel jeweils auch Krallen oder Schnappverbindungen dienen.

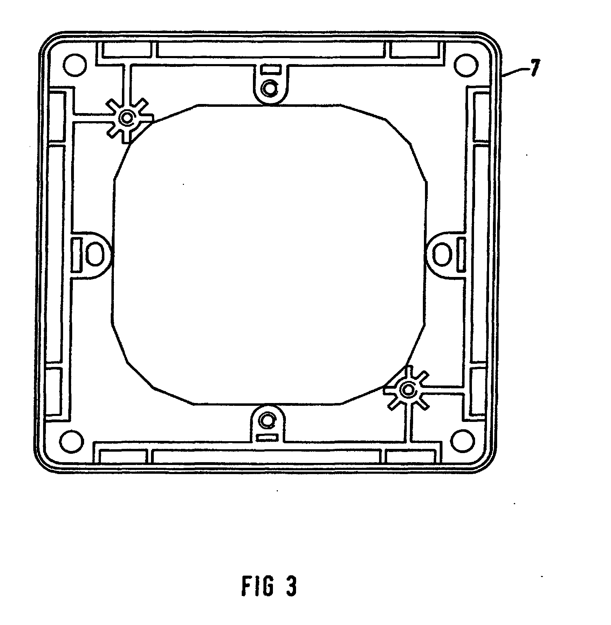

In FIG 3 ist die Aufsicht auf den Zwischenrahmen 7 bei abgenommenem Abdeckrahmen und Bedienteil wiedergegeben.

Der Zwischenrahmen 7 kann also auf der Einbaudose 3 durch Schrauben, Schnappverbindungen oder Krallenverbindungen befestigt werden. Der Zwischenrahmen 7 setzt um eine Höhe 11 den Hängebügel 2 mit dem Geräteeinsatz 1 höher. Hierbei kann der Hängebügel auf dem Rand des Zwischenrahmens 7 aufliegen. Am Zwischenrahmen 7 benötigt man dann Befestigungsmöglichkeiten für den Geräteeinsatz 1. Dadurch können mit geringstem Aufwand Geräteeinsätze wie Taster, Schnittstelle für "Power Line", "Radio Frequency" in vorhandenen Einbaudosen nachgerüstet werden.

## Patentansprüche

1. Installationseinrichtung, z. B. Schalter, Taster, Steckdose oder ähnliches, bei der ein Geräteeinsatz (1) mittels eines Rahmens, nachstehend Hängebügel (2) genannt, an einer Einbaudose (3) befestigbar ist, wobei der Einbauraum (4) durch ein entsprechendes Bedienteil (5) abzudecken ist bzw. bei zum Abdecken nicht ausreichender Abmessung des Bedienteils oder aus ästhetischen Gründen in Verbindung mit einem Abdeckrahmen (6) sich abdecken lässt, und wobei auf der Einbaudose (3) ein Zwischenrahmen (7) befestigbar ist, der in seinem Umfangsprofil dem abdeckenden Bedienteil (5) bzw. dem Abdeckrahmen (6) angepasst ist und der Hängebügel (2) durch Befestigungsmittel, beispielsweise Schrauben, an der Einbaudose (3) oder am Zwischenrahmen (7) zu befestigen ist,
**dadurch gekennzeichnet,**
**dass** der Zwischenrahmen (7) eine um eine Höhe (11) erhöhte Auflage für den Hängebügel (2) bildet um eine Anpassung an verschiedene Einbautiefen zu ermoglichen.

2. Installationseinrichtung nach Anspruch 1,
**dadurch gekennzeichnet,**
**dass** die Befestigung des Zwischenrahmens (7) an der Einbaudose (3) durch Verbindungsmittel erfolgt, die zugleich den Hängebügel (2) an der Einbaudose (3) befestigen.

3. Installationseinrichtung nach Anspruch 2,
**dadurch gekennzeichnet,**
**dass** die Befestigungsmittel Befestigungsschrauben (9) sind.

4. Installationseinrichtung nach Anspruch 2,
**dadurch gekennzeichnet,**
**dass** die Befestigungsmittel Krallen sind.

5. Installationseinrichtung nach Anspruch 2,
**dadurch gekennzeichnet,**
**dass** die Befestigungsmittel Schnappverbindungen sind.

## Claims

1. Installation device, e.g. switch, pushbutton, socket or similar, in which a contact block (1) is fixed by means of a frame, called a stirrup hanger (2) below, to a mounting box (3), the mounting space (4) being covered by a corresponding actuator (5), or if the dimensions of the actuator are not sufficient to cover the space or because of aesthetic reasons cover being provided in conjunction with a cover frame (6), and it being possible to fix an intermediate frame (7) on the mounting box (3), the peripheral profile of said intermediate frame being adjusted to the covering actuator (5) or to the cover frame (6), and the stirrup hanger (2) being fixed by fixing means, for example screws, to the mounting box (3) or to the intermediate frame (7), **characterised in that** the intermediate frame (7) forms a support for the stirrup hanger (2) increased by a height (11) in order to permit adjustment to different mounting depths.

2. Installation device according to Claim 1, **characterised in that** the intermediate frame (7) is fixed to the mounting box (3) by connection means which at the same time fix the stirrup hanger (2) to the mounting box (3).

3. Installation device according to Claim 2, **characterised in that** the fixing means are fixing screws (9).

4. Installation device according to Claim 2, **characterised in that** the fixing means are claws.

5. Installation device according to Claim 2, **characterised in that** the fixing means are snap connections.

## Revendications

1. Dispositif d'installation, par exemple interrupteur, bouton poussoir, prise de courant ou analogue, dans lequel une pièce (1) rapportée d'appareil peut être fixée au moyen d'un cadre dénommé ci-après étrier (2) de suspension à une prise (3) encastrée, l'espace (4) d'encastrement étant recouvert par une pièce (5) adéquate de service ou si la dimension de la pièce de service n'est pas suffisante pour le recouvrement ou pour des motifs esthétiques, pouvant être recouvert, en liaison avec un cadre (6) de recouvrement et il peut être fixé sur la prise (3) d'encastrement un cadre (7) intermédiaire dont le profil de pourtour est adapté à la pièce (5) de service de recouvrement ou au cadre (6) de recouvrement, et l'étrier (2) de suspension peut être fixé par des moyens de fixation, par exemple par des vis, sur la prise (3) d'encastrement ou sur un cadre (7) intermédiaire, **caractérisé en ce que** le cadre (7) intermédiaire forme une assise surélevée d'une certaine hauteur (11) pour l'étrier (2) de suspension afin de permettre une adaptation à des profondeurs d'encastrement différentes.

2. Dispositif d'installation suivant la revendication 1,
**caractérisé en ce que** la fixation du cadre (7) intermédiaire à la prise (3) d'encastrement s'effectue par des moyens de liaison qui fixent en même temps l'étrier (2) de suspension à la prise (3) d'encastrement.

3. Dispositif d'installation suivant la revendication 2,
**caractérisé en ce que** les moyens de fixation sont des vis (9) de fixation.

4. Dispositif d'installation suivant la revendication 2,
**caractérisé en ce que** les moyens de fixation sont des colliers.

5. Dispositif d'installation suivant la revendication 2,
**caractérisé en ce que** les moyens de fixation sont des assemblages à déclic.
